# EUROPEAN PATENT SPECIFICATION

(11) **EP 0 717 927 B1**
(45) Date of publication and mention of the grant of the patent: **17.11.1999**
(21) Application number: 95309157.6
(22) Date of filing: 15.12.1995
(51) Int. Cl.: A01J 5/08

(54) **Teat cup assembly and liner therefor**
Melkbecher mit Zitzengummi
Manchon trayeur et doublure

(30) Priority: 22.12.1994 GB 9426270
(43) Date of publication of application: 26.06.1996
(73) Proprietor: Gascoigne Melotte (UK) Ltd, Basingstoke, Hampshire RG24 8PP (GB)
(72) Inventor: Hawkins, Michael Francis, Reading, Berkshire (GB); Tyson, John Joseph, Basingstoke, Hampshire (GB)
(74) Representative: Wolff, Francis Paul

(56) References cited:
- EP-A- 0 468 588
- EP-A- 0 645 079
- FR-A- 2 382 851

## Description

This invention relates to a teat cup assembly for milking machines, and to a teat cup liner, and to a method of assembling a teat cup.

Teat cup assemblies for milking machines are typically of a well known general kind in which a rigid more or less cylindrical teat cup shell contains within it a replaceable elastomeric liner tube, one end of which is adapted to receive a teat of a cow, sheep or goat, and the other end of which terminates in an outlet for milk (see for example EP-A-0 468 588); a pulsating vacuum line is connected through an inlet on the teat cup shell to an interior pulsation chamber formed between the cup wall and the liner, to act on the animal's teat within the flexible liner wall and promote the release of milk from the teat inside the liner; milk emerging from the outlet is drawn away by suction through a clawpiece to a milk transport line; and an air bleed is provided so that air can be drawn into the clawpiece or into the short milk tube leading from the clawpiece to assist in the removal of the milk from the cluster and through the milk line.

Additionally, milk transport line air valves are conventionally provided so that if a teat cup is removed, or falls, from the teat, the rush of air drawn into the milk line is automatically cut off; and when the teat cup is replaced on the teat, the valve automatically reopens to allow milk to be transported away again.

Such valves can be located anywhere in the cluster. It is most appropriate to provide one in each of the teat cup assemblies, although this adds to their bulk. The arrangement may be that the valve is located in or below the lower end of the teat cup liner, and has a side or underneath exit to the milk line, or the valve may be of a kind that allows it to be housed in the liner below a side milk line exit.

In the case of mammals that have low udders and teats, for example goats, and in other circumstances, many known teat cup assembly designs are unsatisfactory, being low, cumbersome, complex, or difficult to clean.

The present invention concerns aspects of the teat cup assembly described below. The scope of the invention extends to all novel aspects of the assembly, whether individually or in combination with other features as described herein.

More specifically, in one aspect of the invention a teat cup assembly may comprise a resiliently deformable teat cup liner extending from an upper pulsation chamber sealingly through a passage into a lower milk discharge chamber, the liner being retained in the passage by a liner portion that is larger than a portion of the passage; wherein a lower end portion of the teat cup liner in the milk discharge chamber is provided with a milk discharge opening substantially immediately below the said passage.

Advantageously, the milk discharge opening in the liner includes a lateral opening. The milk discharge chamber may be provided with a side outlet to a milk line air valve chamber. Further, the milk discharge chamber may advantageously be the location for an air bleed.

In accordance with this aspect of the invention, the milk discharge opening to the teat cup liner, situated more or less immediately below the pulsation chamber, and the side outlet to the air valve chamber, combine to permit a very short teat cup assembly, which is particularly advantageous for milking goats or other low udder mammals.

However, teat cup liners are consumable items and need to be replaced, by hand, from time to time. Because they are made of a material such as silicone rubber or nitrile rubber, and have to be tough and not excessively elastic to stand up to daily use for as long as possible, it is not easy to stretch them to fit in the teat cup, especially when this requires a wide locking portion to be drawn through the narrow sealing passage out of the pulsation chamber into the milk discharge chamber. It is therefore necessary to use a liner that is long enough to afford a sufficient hand grip and, in many cases, is able to accommodate the milk transport line air valve as well.

Accordingly, in the embodiment of the invention outlined above, it is advantageous to provide the milk discharge chamber with a removable portion aligned with the lower end portion of the teat cup liner. This enables a longer teat cup liner to be used in the assembly process, which can subsequently be trimmed to a lesser length, which could not readily be achieved by hand starting with the short liner.

More generally, in another aspect, the invention provides a method of assembling a teat cup, which comprises passing a first end of a resiliently deformable teat cup liner through a teat cup to a passage leading to a milk discharge chamber; securing a second, teat-receiving, end of the liner to the teat cup; drawing the first end through the passage until the passage is engaged by a portion of the liner sufficient to retain the liner therein; and trimming the first end of the liner to leave a milk discharge opening therefrom substantially immediately adjacent the said passage, outside the pulsation chamber.

The invention further provides a teat cup so assembled.

In yet another aspect, the invention provides a teat cup liner, comprising, in sequence: a teat entry portion; a pulsation portion for retention in the pulsation chamber of a teat cup; a configured portion for retaining the liner in a passage out of a teat cup pulsation chamber; a discharge portion; a neck, of reduced liner wall thickness; and a terminal hand grip portion; wherein the liner is a continuous tube from the teat entry portion to the discharge portion, and offers a milk discharge exit at the discharge portion at least if the terminal portion is severed at the neck.

The liner may be continuous tube throughout, but the terminal portion may be solid if preferred. The discharge portion may comprise a lateral discharge opening through the liner wall, and advantageously such an opening is a longitudinal slot extending from adjacent the configured portion of the liner to the neck, so that one end of the slot is opened upon severing the terminal portion at the neck.

In a teat cup assembly in which the milk discharge chamber has a side outlet to a milk line air valve chamber, the air valve chamber may be immediately adjacent the milk discharge chamber, the side outlet from the milk discharge chamber being also a side inlet to the air valve chamber.

Preferably, the air valve comprises a valve disc normally resting on the base of the chamber, adjacent the side inlet, and an exit above the valve disc, so that in conditions of restricted air flow through the chamber from the inlet to the exit the valve disc is undisturbed, but in conditions of high air flow the valve disc is raised thereby to substantially occlude the exit and thus close the valve.

An air bleed can be provided either by an exit bypass or, preferably, by arranging that at least one of the valve disc surface and the exit surround is not perfectly flat; for example, the exit surround may be castellated. This allows the valve to open when the teat cup is replaced on a teat, by allowing the milk line suction to partially evacuate the valve chamber and so reduce the pressure therein until the weight of the disc can overcome the air pressure on its underside, enabling the disc to fall away and open the exit.

One embodiment of the invention is illustrated, by way of example, in the accompanying drawings, in which:
Figure 1 is a side elevation of a teat cup assembly in accordance with the invention;
Figure 2 is a cross-sectional view of the assembly of Figure 1, taken in the plane of the page, looking out from the page, after removal of the air and milk tubes;
Figure 3 is a view, partly in section, taken on the line III-III in Figure 1;
Figure 4 is an elevation of a teat cup liner before incorporation into the teat cup assembly of Figures 1 to 3; and
Figure is an elevation of the lower part of the teat cup liner of Figure 4, from one side, partially cut away.

As shown in the drawings, the teat cup assembly 10 comprises a hard plastics shell 12 formed with an air line connector spigot 14, for connection to an air tube 16 through which a pulsating vacuum can be applied, an air vent 70, and a milk line connector spigot 18, for connection to a milk tube 20, through which an air/milk mixture can be transported from the assembly. The base of the assembly is closed by a rubber base cap 22, and a teat cup liner 24 is received in the top of the teat cup shell, extending internally to just above the base cap, substantially flush with the lower end of the shell.

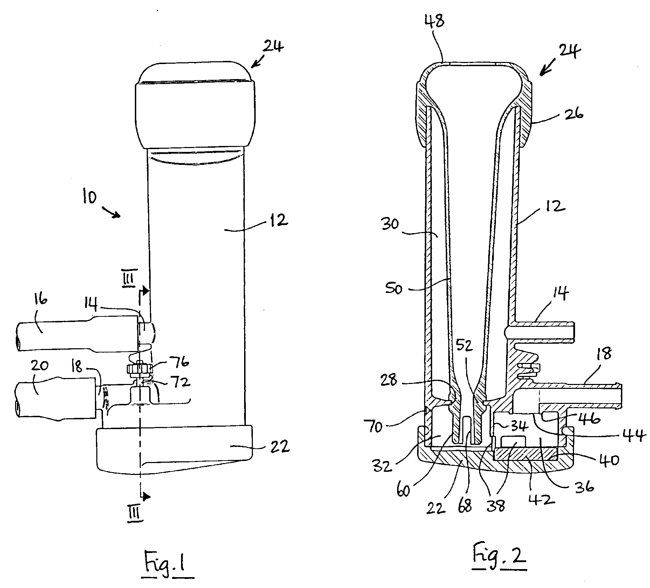

The internal features of the teat cup assembly are shown principally in Figure 2. The teat cup liner 24 is provided with a collar 26 which secures the liner to the top end of the shell 12, and extends downwardly through a passage 28 near the bottom of the shell, separating the shell vertically into an upper pulsation chamber 30, into which the airline connector spigot 14 opens, and a lower milk discharge chamber 32. The milk discharge chamber is provided with an external air vent 70. A common side wall 34 separates the milk discharge chamber from an air valve chamber 36 to one side of it, and three apertures 38 in the base of the common wall act as side outlets from the milk discharge chamber and side inlets to the air valve chamber.

The air valve chamber is substantially cylindrical, and extends into a cylindrical recess 40 formed in the base cap 22 which forms the floor of both the milk discharge chamber and the air valve chamber. The recess 40 accommodates a cylindrical stainless steel valve disc 42, the flat top surface of which is level with or somewhat higher than the lower edges of the apertures 38, while leaving the greater parts of the apertures uncovered for the flow of milk and air. An exit 44 to the milk line spigot 18 is formed centrally in the top wall of the air valve chamber, surrounded by castellations 46 to ensure that when the valve disc is pressed against the exit, an air bleed passage remains.

Dividing wall elements 39 between the three apertures 38 serve the purpose of confining valve disc 42 to the air valve chamber and bracing the rubber base cap 22 while low pressures prevail inside the assembly.

Before its inclusion in the teat cup assembly 10, the teat cup liner 24 is as shown in Figures 4 and 5. It is moulded in a single piece from a resiliently deformable elastomeric material, such as silicone rubber or other material used for teat cup liners. Its upper end includes a relatively flexible teat entry portion 48, which merges externally with the securing collar 26, and internally into a long tapering pulsation portion 50, which leads to a configured portion 52. This includes a groove 54 defined between upper and lower enlarged ring portions 56 and 58.

The purpose of the configured portion 52 is to allow the teat cup liner to be held taut in the teat cup shell, defining the pulsation chamber between the pulsation portion 50 of the liner and the shell wall above the passage 28, the groove 54 being held sealingly in the passage 28.

The aspects of the teat cup liner described above are generally conventional.

However, in accordance with the invention, the conformation of the liner below the configured portion 52 comprises a discharge portion 60, a neck 62 formed by a circumferential **V** groove which locally reduces the liner wall thickness, and a terminal portion 64 provided with a plurality of hand grip ribs 66.

The liner can be fitted into the teat cup shell in an initially conventional manner, after removal of the base cap 22. That is to say, it is fed in from the top, the terminal portion 64 passing through the passage 28 at the bottom of the pulsation chamber 30, and the collar 26 is secured over the top rim of the shell. The terminal portion 64 can then be pulled, by hand, to stretch the liner and distort the lower ring 58 until it snaps through the passage 28 and recovers its shape; the upper ring portion 56 provides an upper seal, and the lower ring portion provides a lower seal, to ensure no leakage between the pulsating vacuum in the pulsation chamber and the milk line suction in the milk discharge chamber.

The discharge portion 60 of the liner is provided with two diametrically opposite lateral discharge slots 68, which extend longitudinally of the discharge portion from the lower ring 58 into the neck 62. Once the groove 54 is engaged with passage 28, the neck 62 is substantially aligned with the lower end of the teat cup shell 12. The terminal portion 64 of the liner can then be severed at the neck 62 by means of a sharp knife or other tool, and the terminal portion discarded. This results in a single continuous milk discharge opening being formed by the two slots 68 and the severed neck 62 between them in the discharge portion 60 of the liner.

The base cap 22 can then be replaced, with the valve disc 42, to complete the assembly of the teat cup.

An air bleed hole 70 is provided in the side wall of the milk discharge chamber 32 opposite the apertures 38, or alternatively at a 90° spacing therefrom, and at a height corresponding to the top of the milk discharge opening from the liner, to provide an air stream for carrying away milk discharged from the liner. If there is no teat in the liner, the valve disc 42 is lifted by the aerodynamic effect of the greatly increased air flow over its upper surface and drawn against the castellations 46 surrounding the exit 44 from the air valve chamber, substantially closing down the air flow into the milk tube 20. When milking is resumed and free air flow through the liner is cut off, air is pumped out through the castellations 46 faster than it bleeds in through the hole 70, and when the pressure has been sufficiently reduced, valve disc 42 falls away.

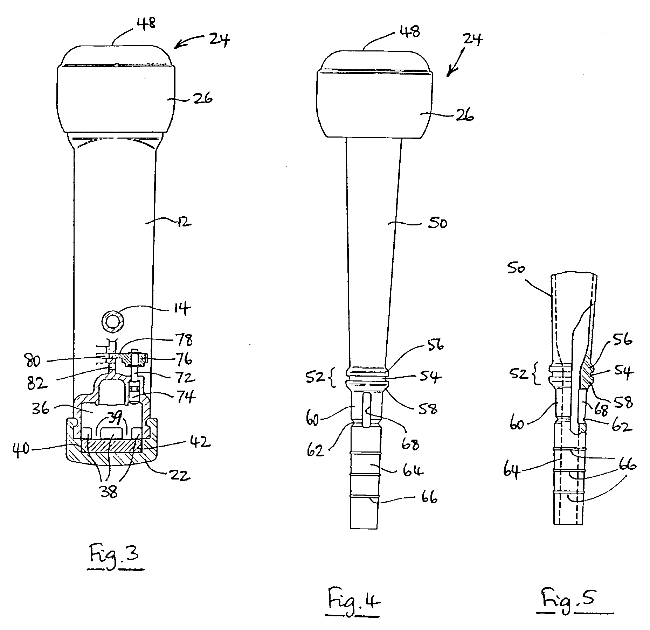

In order to allow the passage of large quantities of air and water through the milk line when the teat cup assembly is to be cleaned, a valve lock is provided to prevent the air valve closing. The valve lock mechanism is best seen in Figure 3, and comprises a spindle 72 connecting a plunger 74, adjacent the exit 44 from the air valve chamber, to an external valve lock head 76, which is provided with a catch 78. The teat cup shell 12 is provided externally with an upper recess 80 and a lower recess 82, with either of which catch 78 can be engaged. It is normally held in the upper recess 80, which disables the valve lock mechanism, but if it is engaged with lower recess 82, the plunger 74 protrudes into the top of the air valve chamber and prevents the valve disc 42 from occluding the exit 44, thus disabling the valve and effectively locking it open.

It has been found that, in the embodiment described and illustrated, the lateral milk discharge openings immediately below the entry of the teat cup liner into the milk discharge chamber, through the side outlet to the air valve chamber, over the top surface of the valve disc and up to the exit to the milk line, with an air bleed directly into the milk discharge chamber, allows a particularly high milk flow to be combined with ease of use and cleaning and a low total height to the teat cup assembly.

## Claims

1. A teat cup assembly comprising a resiliently deformable teat cup liner (24) characterised in that said teat cup liner extends from an upper pulsation chamber (30) sealingly through a passage (28) into a lower milk discharge chamber (32), the liner being retained in the passage (28) by a liner portion that is larger than a portion of the passage; a lower end portion (60) of the teat cup liner (24) in the milk discharge chamber (32) is provided with a milk discharge opening (68) substantially immediately below the said passage.

2. A teat cup assembly according to claim 1 wherein the milk discharge opening in the liner (24) includes a lateral opening (68).

3. A teat cup assembly according to claim 1 or claim 2 wherein the milk discharge chamber (32) is provided with a side outlet (38) to a milk line air valve chamber (36).

4. A teat cup assembly according to claim 3 wherein the air valve chamber (38) is immediately adjacent the milk discharge chamber (32), the side outlet (38) from the milk discharge chamber being also a side inlet to the air valve chamber.

5. A teat cup assembly according to claim 4 wherein the air valve chamber (36) has a valve disc (42) normally resting on the base (22) of the chamber, adjacent the side inlet (38), and an exit (44) above the valve disc, so that in conditions of restricted air flow through the chamber from the inlet to the exit the valve disc is undisturbed, but in conditions of high air flow the valve disc is raised thereby to substantially occlude the exit and thus close the valve.

6. A teat cup assembly according to claim 5 including an air bleed provided by arranging that at least one of the valve disc (42) surface and the exit surround (46) is not perfectly flat.

7. A teat cup assembly according to any one of the preceding claims wherein the milk discharge chamber is provided with a removable portion (22) aligned with the lower end portion (60) of the teat cup liner.

8. A method of assembling a teat cup, which comprises passing a first end (64) of a resiliently deformable teat cup liner (24) through a teat cup (12) to a passage (28) leading to a milk discharge chamber (32); securing a second, teat-receiving, end (26) of the liner to the teat cup; drawing the first end through the passage until the passage is engaged by a portion (52) of the liner sufficient to retain the liner therein; and trimming the first end of the liner to leave a milk discharge opening (68) therefrom substantially immediately adjacent the said passage, outside the pulsation chamber (30).

9. A teat cup liner, comprising, in sequence: a teat entry portion (48); a pulsation portion (50) for retention in the pulsation chamber (30) of a teat cup (12); a configured portion (52) for retaining the liner in a passage (28) out of a teat cup pulsation chamber; a discharge portion (60); a neck (62), of reduced liner wall thickness; and a terminal hand grip portion (64); wherein the liner is a continuous tube from the teat entry portion to the discharge portion, and offers a milk discharge exit (68) at the discharge portion at least if the terminal portion is severed at the neck.

10. A teat cup liner according to claim 9 wherein the discharge portion (60) comprises a lateral discharge opening (68) through the liner wall.

11. A teat cup liner according to claim 10 wherein the lateral discharge opening is a longitudinal slot (68) extending from adjacent the configured portion (52) of the liner to the neck (62), so that one end of the slot is opened upon severing the terminal portion (64) at the neck.

12. A teat cup liner according to any one of claims 9 to 11 wherein the terminal portion (64) is provided with a plurality of hand grip ribs (66).

## Patentansprüche

1. Zitzenschaleneinheit bestehend aus einem weich verformbaren Zitzenschalenfutter (24), dadurch gekennzeichnet, daß das Zitzenschalenfutter von einer oberen Pulsierkammer (30) abdichtend durch einen Durchlaß (28) in eine untere Milchausgabekammer (32) führt, wobei das Futter in dem Durchlaß (28) durch ein gerades Teil festgehalten ist, welches Teil größer als ein Teil des Durchlasses ist; ein unteres Endteil (60) des Zitzenschalenfutters (24) in der Milchausgabekammer (32) ist ausgestattet mit einer Milchausgabeöffnung (68) prinzipiell genau unter dem obgenannten Durchlaß.

2. Zitzenschaleneinheit entsprechend Anspruch 1, wo die Milchausgabeöffnung in dem Futter mit einer seitlichen öffnung (68) ausgestattet ist.

3. Zitzenschaleneinheit entsprechend Ansprüchen 1 oder 2, wo die Milchausgebeöffnung (32) mit einem seitlichen Ausgang (38) an eine Milchschlauch-Luftventilkammer (36) ausgestattet ist.

4. Zitzenschaleneinheit entsprechend Anspruch 3, wo die Luftventilkammer (38) sich direkt neben der Milchausgabekammer (32) befindet, wobei der seitliche Ausgang (38) aus der Milchausgabekammer auch ein seitlicher Eingang in die Luftventilkammer ist.

5. Zitzenschaleneinheit entsprechend Anspruch 4, wo die Luftventilkammer (36) mit einer Ventilscheibe (42) ausgestattet ist, welche normalerweise auf dem Boden (22) der Kammer ruht, neben dem Seiteneingang (38), und ein Ausgang (44) angeordnet über der Ventilscheibe, so daß die Ventilscheibe unter beschränkten Luftflußbedingungen durch die Kammer von dem Eingang zum Ausgang unbetroffen ist, wogegen unter starken Luftflußbedingungen die Ventilscheibe gehoben wird, um dadurch den Ausgang beträchtlich zu verschließen, und dadurch das Ventil zu schließen.

6. Zitzenschaleneinheit entsprechend Anspruch 5, einschließlich eine Luftdruckablaß dadurch erzeugt, daß mindestens eine der Ventilscheibenflächen (42) und der Ausgangsumrahmung (46) nicht absolut flach sind.

7. Zitzenschaleneinheit entsprechend irgendwelcher der vorherigen Ansprüche, wobei die Milchausgabekammer mit einem abnehmbaren Teil (22) ausgestattet ist, das mit dem unteren Endteil (60) des Zitzenschalenfutters ausgerichtet ist.

8. Eine Methode zaum Aufbau einer Zitzenschale, daraus bestehend daß ein erstes Ende (64) einer weich verformbaren Zitzenschaleneinheit (24) durch eine Zitzenschale (12) an einen zur Milchausgabekammer (32) führenden Durchlaß (28) geführt wird; Befestigung eines zweiten, zitzenempfangenden Ende (26) des Futters an die Zitzenschale; das Durchziehen das ersten Endes durch den Durchlaß soweit, bis der Durchlaß durch ein Teil (52) des Futters genügend engagiert ist, um das Futter darin zu festzuhalten, und Abschneiden des ersten Ende des Futters, um eine Milchausgabeöffnung (68) daraus zu lassen, prinzipiell genau neben dem obgenannten Durchlaß, außerhalb der Pulsierkammer.

9. Ein Zitzenschalenfutter, bestehend reihenfolgemäßig aus: Einem Zitzeneingangsteil (48); einem Pulsierteil (50) zur Festhaltung in der Pulsierkammer (30) einer Zitzenschale (12); einem geformten Teil (52) zum Festhalten des Futters in einem Durchlaß (28) aus einer Zitzenschalen-Pulsierkammer; einem Ausgangsteil (60); einem Hals (62) mit reduzierter Futterwand; und einem Handgriff-Endteil (64); worin das Futter einen Kontinuierlichen Schlauch vom dem Zitzeneingabeteil bis zum Ausgabeteil bildet, und einen Milchausgabeausgang (68) mindestens an dem Ausgabeteil bietet, nachdem das Endteil am Hals abgeschnitten ist.

10. Ein Zitzenschalenfutter entsprechend Anspruch 9, wobei das Ausgabeteil (6) aus einer seitlichen Ausgabeöffnung (68) durch die Futterwand besteht.

11. Ein Zitzenschalenfutter entsprechend Anspruch 10 wobei die Ausgabeöffnung ein länglicher Schlitz (68) ist, der sich von einer Stelle neben dem geformten Teil (52) des Futters bis zu dem Hals (62) erstreckt, so daß ein Ende des Schlitzes geöffnet wird, wenn das Endteil (64) am Hals abgeschnitten ist.

12. Ein Zitzenschalenfutter entsprechend irgend einem der Ansprüche 9 bis 11, wobei das Endteil (64) mit einer Anzahl von Handgriffrippen (66) ausgestattet ist.

## Revendications

1. Ensemble de gobelet trayeur comprenant une chemise (24) de gobelet trayeur élastiquement déformable, caractérisé en ce que ladite chemise de gobelet trayeur s'étend à partir d'une chambre supérieure (30), de pulsion, passe à joint étanche à travers un passage (28) pour atteindre une chambre inférieure (32), de décharge du lait, la chemise étant retenue dans le passage par une portion de chemise qui est plus grande qu'une portion du passage ; dans lequel une portion d'extrémité inférieure (60) de la chemise (24) du goblet trayeur qui est contenue dans la chambre (32) de décharge du lait est munie d'une ouverture (68) de décharge du lait pratiquement immédiatement au-dessous dudit passage.

2. Ensemble de gobelet trayeur selon la revendication 1, dans lequel l'ouverture de décharge du lait ménagée dans la chemise (24) comprend une ouverture latérale (68)

3. Ensemble de gobelet trayeur selon la revendication 1 ou la revendication 2, dans lequel la chambre (32) de décharge du lait est munie d'une sortie latérale (38) débouchant dans une chambre (36) de soupape à air de la conduite de lait.

4. Ensemble de gobelet trayeur selon la revendication 3, dans lequel la chambre (38) de la soupape à air est immédiatement adjacente à la chambre (32) de décharge du lait, la sortie latérale (38) qui part de la chambre de décharge du lait étant aussi une entrée latérale donnant dans la chambre de la soupape à air.

5. Ensemble de gobelet trayeur selon la revendication 4, dans lequel la chambre (36) de la soupape à air comprend un disque de soupape (42) qui est normalement appuyé sur le fond (22) de la chambre, à côté de l'entrée latérale (38), et une sortie (44) au-dessus du disque de soupape, de sorte que, dans des conditions de débit d'air limité à travers la chambre, de l'entrée à la sortie, le disque de soupape est laissé sans distribution tandis que, dans des conditions de grand débit d'air, le disque de soupape se soulève pour obstruer pratiquement la sortie et fermer ainsi la soupape.

6. Ensemble de gobelet trayeur selon la revendication 5, comprenant une fuite d'air prévue en faisant en sorte qu'au moins l'un des éléments constitués par la surface du disque de soupape (42) et par la bordure (46) de la sortie, ne soit pas parfaitement plat.

7. Ensemble de gobelet trayeur selon une quelconque des revendications précédentes, dans lequel la chambre de décharge du lait est munie d'une partie amovible (22) alignée avec la partie d'extrémité inférieure (60) de la chemise du gobelet trayeur.

8. Procédé pour assembler un gobelet trayeur qui comprend enfiler une première extrémité (64) d'une chemise de gobelet trayeur élastiquement déformable (24) à travers un gobelet trayeur (12) jusqu'à ce qu'elle atteigne un passage (28) qui mène à une chambre (32) de décharge du lait; fixer au gobelet trayeur une deuxième extrémité (26) de la chemise qui reçoit le trayon ; tirer la première extrémité à travers le passage jusqu'à ce que le passage soit en prise avec une portion (52) de la chemise qui est suffisante pour retenir la chemise dans ce passage; et couper la première extrémité de la chemise pour ménager une ouverture (68) de décharge du lait partant de cette extrémité qui soit pratiquement immédiatement adjacente audit passage, en dehors de la chambre de pulsation (30).

9. Chemise de gobelet trayeur comprenant, successivement : une partie (48) d'entrée du trayon ; une partie de pulsation (50) destinée à être retenue dans la chambre de pulsation (30) d'un gobelet trayeur (12) ; une partie profilée (52) destinée à retenir la chemise dans un passage (28) menant hors de la chambre de pulsion du gobelet trayeur ; une partie de décharge (60) ; un col (62) dans lequel l'épaisseur de la paroi de la chemise est réduite ; et une partie terminale (64) formant prise pour la main ; dans laquelle la chemise est un tube continu depuis la partie d'entrée du trayon jusqu'à la partie de décharge, et offre une sortie de décharge du lait dans la partie de décharge, du moins si la partie terminale est coupée au niveau du col.

10. Chemise de gobelet trayeur selon la revendication 9, dans laquelle la partie de décharge (60) comprend une ouverture de décharge latérale (68) ménagée à travers la paroi de la chemise.

11. Chemise de gobelet trayeur selon la revendication 10, dans laquelle l'ouverture de décharge latérale est une fente longitudinale (68) qui s'étend d'un point adjacent à la partie profilée (52) de la chemise jusqu'au col (62), de sorte qu'une extrémité de la fente est ouverte lorsqu'on coupe la partie terminale (64) au niveau du col.

12. Chemise de gobelet trayeur selon une quelconque des revendications 9 à 11, dans laquelle la partie terminale (64) est munie d'une pluralité de nervures (66) formant prise pour la main.
